# EUROPEAN PATENT SPECIFICATION

(11) **EP 2 477 881 B1**
(45) Date of publication and mention of the grant of the patent: **20.04.2016**
(21) Application number: 10771176.4
(22) Date of filing: 14.09.2010
(51) Int. Cl.: B62M 3/00, G01L 5/22, G01L 3/24

(54) **DEVICE FOR DETECTING PARAMETERS INDICATIVE OF PHYSICAL ACTIVITY AND BICYCLE INCLUDING SAID DEVICE**
VORRICHTUNG ZUR ERKENNUNG VON PARAMETERN ZUR ANZEIGE KÖRPERLICHER AKTIVITÄT UND FAHRRAD MIT DIESER VORRICHTUNG
DISPOSITIF DE DÉTECTION DE PARAMÈTRES INDICATIFS D'ACTIVITÉ PHYSIQUE, ET VÉLO COMPRENANT CE DISPOSITIF

(30) Priority: 14.09.2009 IT MI20091568
(43) Date of publication of application: 25.07.2012
(73) Proprietor: Studio A.I.P. S.R.L., 21040 Oggiona con Santo Stefano (VA) (IT)
(72) Inventor: BRIVIO, Antonio, I-21040 Oggiona con Santo Stefano (Varese) (IT); BRIVIO, Marco, I-21040 Oggiona con Santo Stefano (Varese) (IT)
(74) Representative: Ponzellini, Gianmarco
(86) International application number: PCT/IB2010/002314
(87) International publication number: WO 2011/030215

(56) References cited:
- EP-A2- 2 058 637
- WO-A1-2009/006673
- WO-A2-2008/058164
- DE-A1- 4 435 174
- DE-A1- 10 007 841
- US-A- 5 027 303

## Description

The present invention concerns a device for detecting significant parameters of physical activity necessary for human propulsion, performed using double-lever systems, such as, among the various example, setting the pedal-crank mechanism in rotation with the lower limbs, or a winch-type rotating mechanism (such as those used in sailing boats) using the upper limbs. Although the present invention is mainly applicable in the monitoring of sporting-type activities, in particular the present invention is applicable to any type of existing bicycle or similar vehicle or movement system propelled by human beings. Further, the invention can also be applied in training equipment employing double-levers, such as cyclettes, also known as exercise bicycles. For the sake of simplicity, hereinafter main reference will be made to the pedal-crank mechanism of bicycles or cyclettes.

As is known, there exist various systems and devices destined to detect significant data and parameters, such as, for example, present speed, average speed, distance covered, calories consumed, heart-beat rates and the like, inherent to the motion of bicycles and the physical activity of cyclists.

From among the various known systems and devices, two systems can be distinguished which are able to detect the indicative parameters of physical activity, as they supply indications on the power developed during cyclists' pedalling activities.

A first detection system is constituted by a first pedal-crank mechanism provided with a suitable rayed coupling element fixable on one of the gears of the transmission crown of the bicycle. The coupling element exhibits a star-configuration the rays of which define respective hooking points for stable coupling of the first pedal-crank mechanism to the transmission crown. A second pedal-crank mechanism is engaged, via a central connecting spindle, to the first, such as to define, together with the gears of the drive crown, a system able to transfer the forces applied on the pedals of the bicycle into a rotating motion of the transmission crown which then, for example via a relay chain, sets the rear wheel of the bicycle in motion.

The first system is further provided with suitable torque sensors by means of which it is possible to detect, substantially at the coupling element and the transmission crown, the overall intensity of the torque generated about the connecting spindle between the two pedal-crank mechanisms during pedalling. In this way, it is possible to measure the power generated by the cyclist during the use of his or her bicycle.

Naturally, the installation of the first detecting system of the power delivered, requires the substitution of the pedal-crank mechanism and the central connecting spindle.

A second detection system in use today, applicable directly to the rear wheel, comprises the use of suitable torque sensors which are able to detect the value of the torque at the pack of pinions keyed on the axle of the rear wheel.

Contrary to the mounting mode of the first system, the installation of the second system requires only the momentary disengagement of the rear wheel in order to enable correct application of the second system on the pinion pack.

Unlike the first system, the second detection system does not enable measurement of the power developed by the cyclist, but only detection of the useful power for movement of the bicycle. Although the above-mentioned detection systems enables measurement of parameters relating to the torque generated or transmitted during pedalling, the Applicant has found that the known devices are not however free of some drawbacks and are liable to improvement in various ways. For example, the known devices cannot be improved in terms of accurate analysis of the application of forces that the cyclist generates on the pedal-crank mechanism and thus on the components of the bicycle transmission.

Further, the above-described known systems do not enable analysis of the cyclist's posture during his or her physical activity, both under controlled effort and maximum effort.

In particular, the Applicant has found that the above-cited detection systems are only able to provide data on the power developed by the cyclist or the torque useful for moving the bicycle which reaches the spindle of the rear wheel. These systems are not able to provide more specific details which can be used to more fully understand the development mode of the physical effort and the application over time of the forces on the pedal-crank mechanism.

Document WO2009/006673 describes a pedal-crank mechanism provided with sensors in proximity of the attachment between the pedal-crank mechanism and able to detect both the radial force, directed along the axis of the pedal-crank mechanism, and the tangential action, directed perpendicularly to the pedal-crank axis.

Although this solution is an improvement on the previously-described solutions, it is not able to provide all the information useful for deducing the loads transmitted to the pedal-crank mechanism and to analyse the cyclist's posture during application of the effort on the pedals.

### SUMMARY OF THE INVENTION

The main aim of the present invention is to obviate one or more of the problems encountered in the prior art.

An aim of the present invention is thus to provide a detecting device able to accurately analyse the physical activity of the cyclist, in the case of cycles, or more in general of the athlete, in a case of other double-crank systems.

A further aim of the present invention is to provide a detecting device which is able to analyse loads generated during physical activity at each pedal-crank.

An auxiliary aim of the present invention is to provide a device which can measure the intensity of the forces and the torque generated on each pedal-crank.

A further aim of the present invention is to monitor and supply a series of data on the posture of the cyclist during his or her physical activity.

A further aim of the present invention is to supply indications on the pedalling modes of the cyclists but in thrust phase, i.e. relating to the descent of the pedals, and in the return phase, i.e. relating to the rise of the pedals.

A further aim of the present invention is to provide a modular device of the universal type which is suitable for application on any type of existing bicycle.

One or more of the above-specified aims are substantially attained by a device for detecting significant parameters of the physical activity according to what is set out in the appended claims.

Aspects of the invention are described herein below.

A first aspect comprises a device for detecting significant parameters of physical activity, the device (1) comprising:
a first lever (2) operatively engageable to the frame of a human-propelled movement system, the first lever (2) exhibiting a free end (4) for engaging with a first thrust element emerging transversally to a main development axis of the first lever (2);
a second lever (6) operatively engageable to the frame of a human-propelled movement system on an opposite side thereof with respect to the first lever (2), the second lever (6) exhibiting a free end (8) for engaging with a second thrust element emerging transversally to a main development axis of the second lever (6);
a connecting spindle (10) interposed between the levers (2, 6) for setting the levers (2, 6) in rotation at least about an axis (X), the connecting spindle (10) developing along the axis (X) which is transversal to the main development axis of the first and second lever (2, 6) and being predisposed to at least partially cross a frame of the human-propelled movement system;
sensor means (14) for detecting at least a significant parameter of the work performed during the rotation of at least one of the levers of the device about the axis (X), in which the sensor means (14) are configured such as to determine the value of at least a load selected from the group comprising: a resultant force transmitted by a user on at least one of the thrust elements, a radial component (ODX, OSX) of the resultant force which radial component is instant by instant directed parallel to the respective lever (2, 6), a tangential component (VDX, VSX) of the resultant force, which tangential component is instant by instant directed perpendicularly to the lever (2, 6), and at least a torque with respect to a predetermined axis generated by the resultant force or by one of the tangential and radial components.

In a second aspect, in accordance with the first aspect, the sensor means are connected to a programmed control unit for calculating a distance (DDX, DSX) between a point of application of the resultant force and the reference axis on the basis of the measured value of the load and the measured value of the torque.

In a third aspect, in accordance with any one of the preceding aspects, the sensor means (14) are configured such as to determine the tangential component (VDX, VSX) of the resultant force, and the torque (MT) generated by the tangential component with respect to the main development axis (O) of the lever, the control unit being programmed in order to calculate the distance (DDX, DSX) as a ratio between the value of the torque and the value of the tangential component.

In a fourth aspect, in accordance with any one of the preceding aspects, the sensor means (14) are configured such as to determine the radial component (ODX, OSX) of the resultant force, and the flexion torque generated by the radial component along the main development axis (O) of the lever, the control unit being programmed to calculate the distance (DDX, DSX) as a ratio between the value of the flexion torque and the value of the radial component.

In a fifth aspect, in accordance with any one of the preceding aspects, identical sensor means (14) are arranged on both the first and second levers.

In a sixth aspect, in accordance with any one of the preceding aspects, the sensor means comprise:
at least a set of extensometers (18) operatively engaged on each lever (2, 6) in order to detect at least the torque (MT),
at least a set of extensometers (18) operatively engaged on each lever (2, 6) in order to detect at least the radial component (OSX, VDX),
at least a set of extensometers (18) operatively engaged on each lever (2, 6) in order to detect at least the axial component (VSX, VDX).

In a seventh aspect, in accordance with the preceding aspect, each set of extensometers (18) is in electronic communication with at least a programmable control unit, configured for:
receiving the measurements detected by the sensor means (14), and
calculating, for each lever (2, 6), the distance (DDX, DSX) between the application point (DP, SP) of the force (FDX, FSX) produced by the user on the respective thrust element and the engagement point (IDX, ISX) of the thrust element on the respective lever (2, 6), or the distance between the application point (DP, SP) of the force (FDX, FSX) produced by the user on the respective thrust element and an ideal thrust centre located on the thrust element at a predetermined position.

In an eighth aspect, in accordance with any one of the preceding aspects, the sensor means (14) are destined to detect, for each lever or pedal-crank mechanism (2, 6), the intensity of the tangential component (VDX, VSX) and radial component (ODX, OSX) of the resulting force (FDX, FSX) produced by the user on the respective thrust element and the intensity thereof.

In a ninth aspect, in accordance with any one of the preceding aspects, the sensor means (14) comprise, for each lever (2, 6):
a first deformation sensor (19) and a second deformation sensor (20), the first and second deformation sensors (19, 20) of each lever (2, 6) respectively detecting the tangential component (VDX, VSX) and radial component (ODX, OSX) of the resultant force (FDX, FSX) produced by the user on the respective thrust element, and
a third deformation sensor (21) for measuring the torque (MT),
the first, second and third sensors being in electronic communication with the programmable control unit.

In a tenth aspect, in accordance with any one of the preceding aspects, a control unit is configured such as to determine an efficiency parameter as a ratio between the tangential component (VDX, VSX) of the resultant force (FDX, FSX) produced by the user on a respective thrust element and the value of the resultant force (FDX, FSX) produced by the user on the thrust element.

In an eleventh aspect, in accordance with any one of the preceding aspects, the device comprises one or more sensors (70) predisposed to detect the rotation angle or the instantaneous angular position of each lever with respect to a reference, in which the rotation angle sensor or sensors are connected to the control unit, the control unit being programmed to determine the angular velocity of the levers (2, 6).

In a twelfth aspect, in accordance with any one of the preceding aspects, a control unit is programmed for:
determining, for each lever and on the basis of the signal coming from the rotation angle sensor or angular position sensor, when each lever is in a rising phase or a descending phase, and
calculating the values of the power developed (PDX, PSX) both during the rise of the respective thrust element from a bottom dead centre (PMI) to a top dead centre (PMS) and during the descent of the respective thrust element from the top dead centre (PMS) to the bottom dead centre (PMI).

In a thirteenth aspect, in accordance with the preceding aspect, the control unit is configured to calculate, for each lever, a ratio (KDX, KSX) between the value of the developed power (PDX, PSX) during the rising phase or the descending phase of the respective thrust element and the overall power developed during a revolution of the respective lever.

In a fourteenth aspect, in accordance with any one of the preceding aspects, the levers (2, 6) are identical, each lever (2, 6) exhibiting:
a connecting end (3, 7) opposite the respective free end (4, 8), provided with an engagement seating (11, 12), optionally cogged, for axial insertion of an end (13), optionally cogged, of the connecting spindle (10);
a housing chamber (15) for a respective electronic instrumentation (16) of the sensor means (14), the housing chamber (15) being closable by a respective cover (17);
at least a seating (22), preferably two, for housing at least a set of extensometers (18) of the sensor means (14);
at least a surface (23) for supporting the deformation sensors (19, 20, 21), the seating (22) and the support surface (23) being coverable by at least a covering cap (24);
at least an engaging seating (4a, 8a), at the free end (4, 8), for operative fastening of the respective thrust element, in particular the connecting spindle (10) being substantially tubular in order to enable crossing of one or more electrical and/or electronic connectors (10a) between the electronic instrumentation (16) located internally of the housing chamber (17) of each lever (2, 6).

In a fifteenth aspect, in accordance with any one of the preceding aspects, the first and second levers respectively comprise a first and a second pedal-crank, and the first and the second thrust elements comprise a first and a second pedal.

In a sixteenth aspect, in accordance with any one of the preceding aspects, at least a coupling element (25) is fixable to the first lever or pedal-crank (2) and/or the connecting spindle (10), in particular at the first lever or pedal-crank (2), in order to join in rotation the levers or pedal-cranks (2, 6) to at least a transmission element of the motion of the human-propelled movement system.

In a seventeenth aspect, in accordance with the preceding aspect, the coupling element (25) is provided with a plurality of rays (25a) extending from a central portion (25b) and each exhibiting a free end (25c) destined to engage with a crown of a bicycle.

An eighteenth aspect comprises a device for detecting significant parameters of the physical activity necessary for human propulsion performed by double-lever systems, such as the setting in rotation with the lower limbs of the pedal-crank of a bicycle, or using the upper limbs for turning the winch of a sailing boat, especially for human propulsion movement systems, the device (1) comprising:
a first lever or pedal-crank (2) operatively engageable to the frame of a human-propelled movement system, the first lever or pedal-crank (2) exhibiting a free end (4) for engaging with a first thrust element or pedal, in particular emerging transversally to a main development axis of the first lever (2);
a second lever or pedal-crank (6) operatively engageable to the frame of a human-propelled movement system on an opposite side with respect to the first lever or pedal-crank (2), the second lever or pedal-crank (6) exhibiting a free end (8) for engaging with a second thrust element or pedal emerging transversally to a main development axis of the second lever (6);
a connecting spindle (10) interposable between the levers or pedal-cranks (2, 6) for setting the levers (2, 6) in rotation at least about an axis (X), the connecting spindle (10) developing along an axis (X) which is transversal to the main development axis of the first and second lever or pedal-cranks (2, 6) and being predisposed to at least partially cross a frame of the human-propelled movement system;
at least a coupling element (25) fixable to the first lever or pedal-crank (2) and/or to the connecting spindle (10), in particular at the first lever or pedal-crank (2), for joining in rotation the levers or pedal-cranks (2, 6) at least at a drive transmission element of the human-propelled movement system, the coupling element (25) in particular being provided with a plurality of spokes (25a) extending from a central position (25b) and each exhibiting a free end (25c) destined to engage a crown of a bicycle;
sensor means (14) for detecting at least a significant parameter of the work performed during the rotating of the device, in which the sensor means (14) are arranged on both the first and second lever or pedal-crank (2, 6), the sensor means (14) being able to detect and enable measurement of at least the intensity of the respective forces (FDX, FSX) generated during each thrust of the user on the respective thrust element or pedal, and being able to detect and consequently enable monitoring of the power developed at the first and the second lever or pedal (2, 6).

In a nineteenth aspect, in accordance with the preceding aspect, the sensor means (14) comprise at least a set of extensometers (18) operatively engaged on each lever or pedal-crank (2, 6) for detecting at least the torque (MT) generated along the structure thereof during each thrust of the user on the respective thrust element or pedal, each set of extensometers (18) being in electronic communication with at least an electronic unit programmable for managing the data and parameters detected by the sensor means (14).

In a twentieth aspect, in accordance with any one of aspects 18 and 19, the sensor means (14) are destined to detect, for each lever or pedal (2, 6), the distance (DDX, DSX) between the application point (DP, SP) of the force (FDX, FSX) produced by the user on the respective thrust element and the engagement point (IDX, ISX) thereof on the thrust element or pedal (2, 6), or the distance between the application point (DP, SP) of the force (FDX, FSX) produced by the user on the respective thrust element and an ideal thrust centre located on the thrust element at a predetermined position.

In a twenty-first aspect, in accordance with one or more of the preceding aspects, the sensor means (14) are destined to detect, for each lever or pedal (2, 6), the intensity of the tangential components (VDX, VSX) and radial components (ODX, OSX) of the force (FDX, FSX) produced by the user on the respective thrust element and the intensity thereof.

In a twenty-second aspect, in accordance with the preceding aspect, the sensor means (14) comprise, for each lever or pedal (2, 6), a first deformation sensor (19) and a second deformation sensor (20) of each lever or pedal (2, 6), for detecting the tangential component (VDX, VSX) and the radial component (ODX, OSX) of the force (FDX, FS) produced by the user at the respective thrust element, from the vectorial sum of which the intensity of the force (FDX, FS) is calculated, and being in electronic communication with the electronic unit programmable for managing the data and parameters detected by the sensor means (14), the sensor means (14) in particular comprising, for each lever or pedal (2, 6), a third deformation sensor (21) for measuring the torque.

In a twenty-third aspect, in accordance with the 22nd or 21st aspect, the sensor means (14) are destined to enable detection and processing of the efficiency of each activating by the user of each lever or pedal (2, 6), the efficiency of each activation being given by the ratio between the component (VDX, VSX) of the force (FDX, FSX) produced by the user on a respective thrust element and the total value of the force (FDX, FSX) produced by the user on the thrust element. In a twenty-fourth aspect, in accordance with any one of the preceding aspects, further sensor means are provided for detecting: the rotation angle of the levers or pedals (2, 6); and/or the revolutions per minute of the levers or pedals (2, 6); and/or the energy generated (ENDX, ENSX) at each lever or pedal (2, 6) in a pre-settable time period; and/or the total energy (ENT) generated in a pre-settable time period; and/or the rotation angle of at least a wheel of the bicycle; and/or the revolutions per minute of at least a wheel of the bicycle; and/or the instantaneous and average speed of the bicycle; and/or the heartbeat rate of the user; and/or the gradient of the ground the bicycle is running on.

A twenty-fifth aspect comprises a device having a first lever (2) which is operatively engageable to the frame of a human-propelled movement system, the first lever (2) exhibiting a free end (4) for engaging with a first thrust element emerging transversally to a main development axis of the first lever (2); a second lever (6) operatively engageable to the frame of a human-propelled movement system on an opposite side with respect to the first lever (2), the second lever (6) exhibiting a free end (8) for engaging with a second thrust element emerging transversally to a main development axis of the second lever (6); a connecting spindle (10) interposed between the levers (2, 6) for uniting the lever (2, 6) in rotation at least about an axis (X), the connecting spindle developing along the axis (X) which is transversal to the main development axis of the first and second lever (2, 6), wherein the thrust elements are engaged to the levers (2, 6) after interposing of an adapter (50) having a radially-external prismatic surface, for example a polygonal surface or in any case a surface shaped such as to insert non-rotatably in a main seating (51) which is complementarily-shaped thereto and is present on the lever (2, 6).

In a twenty-sixth aspect the device of the 25th aspect can also comprise the additional characteristics of aspects from 1 to 24.

In a twenty-seventh aspect in accordance with 25th or 26th aspect, the adapter exhibits, in an eccentric position, an auxiliary seating (52) for receiving the thrust elements (5, 9).

In a twenty-eighth aspect, in accordance with any one of aspects from the 25th to the 27th, thanks to the prismatic surface of the adapter it is possible to position the adapter in a plurality of different angular positions, thus changing the position of axis of the pedal or other thrust element with respect to the rotation axis X of the spindle.

A twenty-ninth aspect comprises a bicycle or a cyclette or a gymnastic apparatus or a winch comprising a device according to any one of the preceding aspects.

### DETAILED DESCRIPTION

There now follows, by way of non-limiting example, a detailed description of some embodiments of the device for detecting significant parameters of physical activity. In the detailed description that follows, non-limiting reference will be made to double-pedal-crank systems used on bicycles (for example cyclettes or bicycles): however, as already mentioned herein above, this is not to be interpreted as limiting inasmuch as the invention can also be applied to other technical solutions where three are two or more levers connected to a common rotation axis (or spindle). The detailed description is made with reference to the accompanying figures of the drawings, in which:
figure 1 is a perspective view of a device for detecting the indicative parameters of physical activity of a cyclist and/or the movement of a bicycle or a similar vehicle propelled by a human, in accordance with the present invention;
figure 2 is a further perspective view of the device of figure 1;
   figure is a plan view of the device of figure 1;

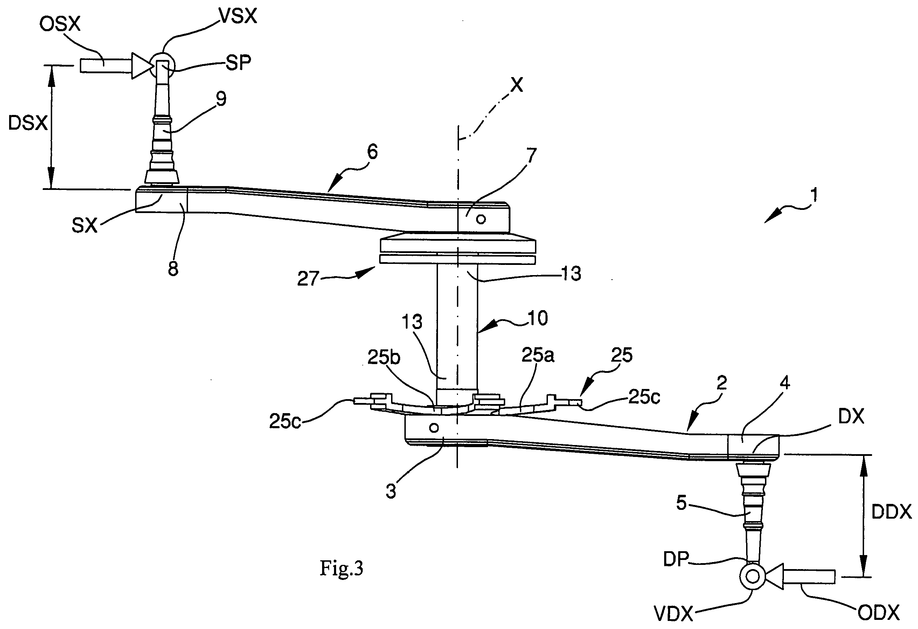

figure 4 is a perspective exploded view of the device of figures 1 and 3;
figure 5 is a perspective exploded view of the device of figure 2;
figure 6 is a section of the device of the preceding figures, made along a horizontal median line;
figure 7 is a schematic elevated view of two components of the device of the preceding figures;

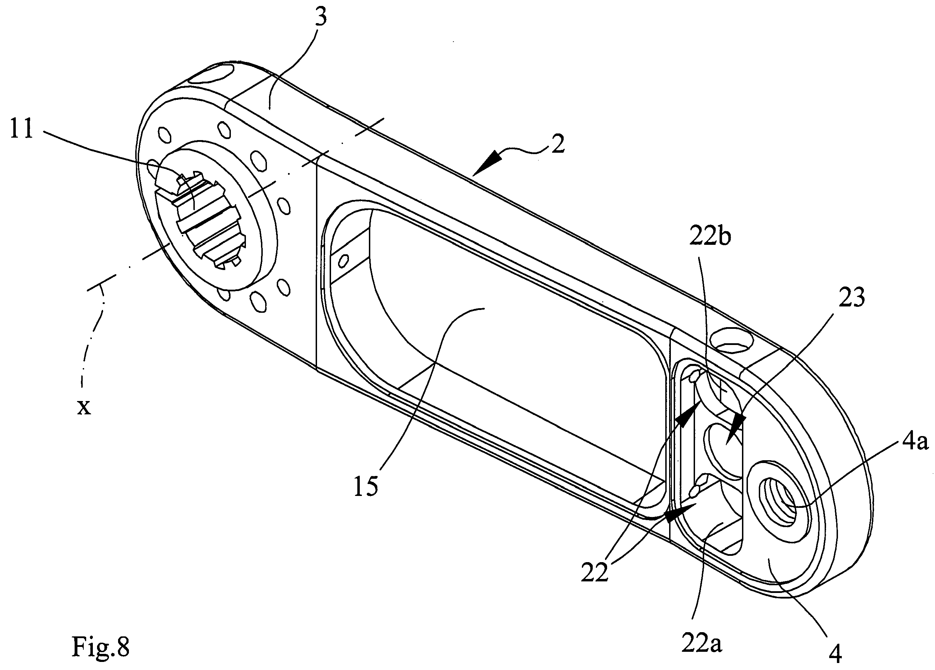

figure 8 is a first perspective view of one of the components illustrated in figure 7;

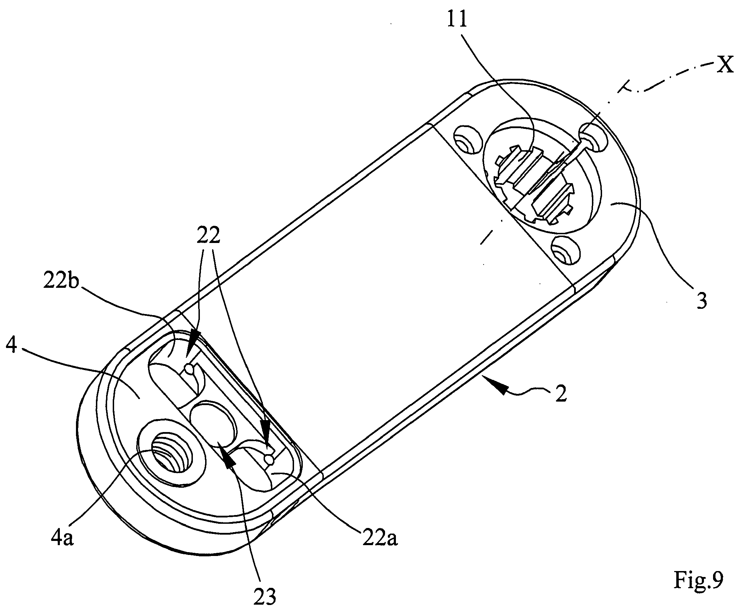

figure 9 is a further perspective view of the component illustrated in figure 8;
figure 10 is a first diagram of a monitoring card of the device of the preceding claims;
figure 11 is a second diagram of a monitoring quadrant of the device of claims from 1 to 10;
figure 12 is a third diagram of a monitoring quadrant of the device of figures from 1 to 11;
figure 13 is a view of a terminal portion of a lever (pedal-crank or the like) to which a group of sensors of a further aspect of the invention is applied;
figure 14 is a section along line XIV-XIV of figure 13; and
figure 15 is a section along line XV-XV of figure 13.

With reference to the figures of the drawings, 1 denotes in its entirety a device for detecting the indicative parameters of physical activity developed by means of double-lever systems. For example, the device 1 can be used in transmission systems of forces, such as bicycle pedal-cranks, sailing-boat winches, double-lever systems for training the lower or upper limbs and in other systems too.

For the sake of simplicity, herein below reference will be made to the use of the device 1 on pedal-crank mechanisms of bicycles or exercise bicycles - cyclettes - of any type, in each case highlighting the applicability of the invention to other like systems (of propulsion or transmission of motion) in which at least two levers keyed onto a common spindle are used.

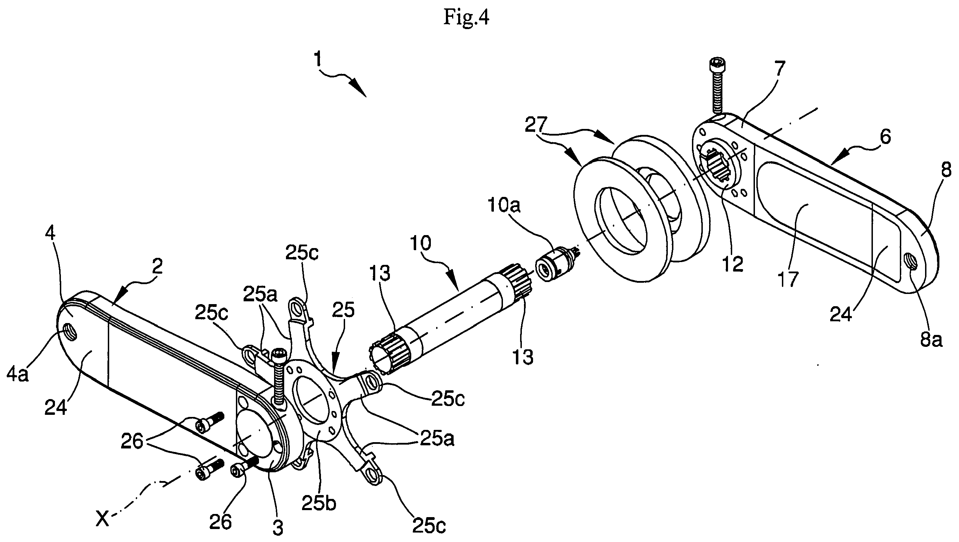

As is visible in figures from 1 to 6, the device 1 comprises a first lever or pedal-crank 2 operatively engageable to the frame of a human-propelled movement system, in detail of a bicycle (not represented). The first pedal-crank 2 exhibits a connecting end 3 predisposed to operatively engage the frame of the respective bicycle on which the device 1 is mounted, and a free end 4, arranged on an opposite side with respect to the connecting end 2 and predisposed to support, in a first engagement seating 4a (figures 4 and from 6 to 9), a first hub 5 (figures from 1 to 3, 5 and 6) of a respective first thrusting element or pedal (not illustrated).

As can be seen in figures from 1 to 6, the device 1 comprises a second lever or pedal-crank 6, preferably identical to the first pedal-crank 2, and operatively engageable to the frame of the bicycle on the opposite side with respect to the first pedal-crank 2. The second pedal-crank 6 exhibits a connecting end 7 predisposed to operatively engage the frame of the respective bicycle on which the device 1 is mounted, and a free end 8, arranged on the opposite side with respect to the connecting end 7 and predisposed to support, in a second engagement seating 8a, a second hub (figures from 1 to 3, 5 and 6) of a respective second thrusting element or pedal (not illustrated).

Still with reference to figures from 1 to 6, the device 1 further comprises a connecting spindle 10 interposable between the pedal-cranks 2, 6 in order to join them such that they are able to rotate about a respective rotation axis X which extends along the connecting spindle 10, when the connecting spindle 10 is located by rotation internally of a respective seating (not visible in the accompanying figures) of the bicycle (or other movement system) on which the device 1 is mounted. In particular, when the device 1 is mounted on a respective bicycle the connecting spindle 10 crosses the respective seating of the bicycle frame, ensuring the joining of the pedal cranks 2, 6.

With reference to figures from 1 to 11, the connecting end 3, 7 of each pedal-crank 2, 6 is provided with an engaging seating 11, 12, preferably cogged, for axial insertion of a respective end 13, preferably cogged, of the connecting spindle 10.

The cogging fashioned internally of the engaging seating 11, 12 of each pedal-crank 2, 6 and the cogging fashioned externally on the ends 13 of the connecting spindle 10, guarantee precise coupling between the connecting spindle 10 and the pedal-cranks 2, 6 and the secure and reliable rotating union thereof. The coupling between the seatings of the pedal-cranks and the spindle can also be realised in other ways: for example, the ends 13 of the spindle can be screwed, or forced into the seatings 11, 12; alternatively the ends 13 can exhibit a polygonal profile complementarily-shaped to a corresponding polygonal profile of the seating 11, 12; in a further variant, the spindle can be fashioned in a single piece on one or both pedal-cranks or both the pedal-cranks, or welded thereto. In any case the spindle and pedal-cranks are angularly solidly constrained to one another such as to receive and transmit the motion impressed during the pedalling action.

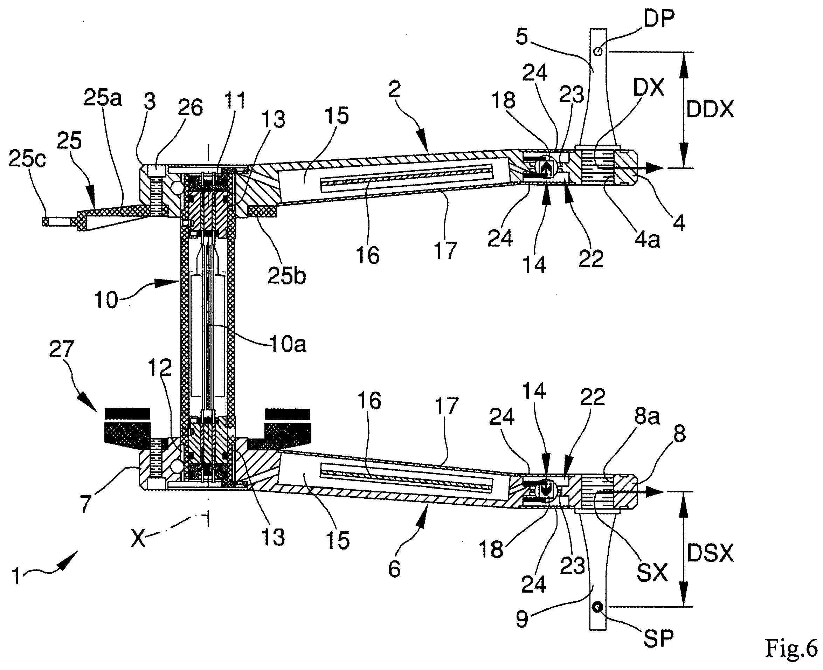

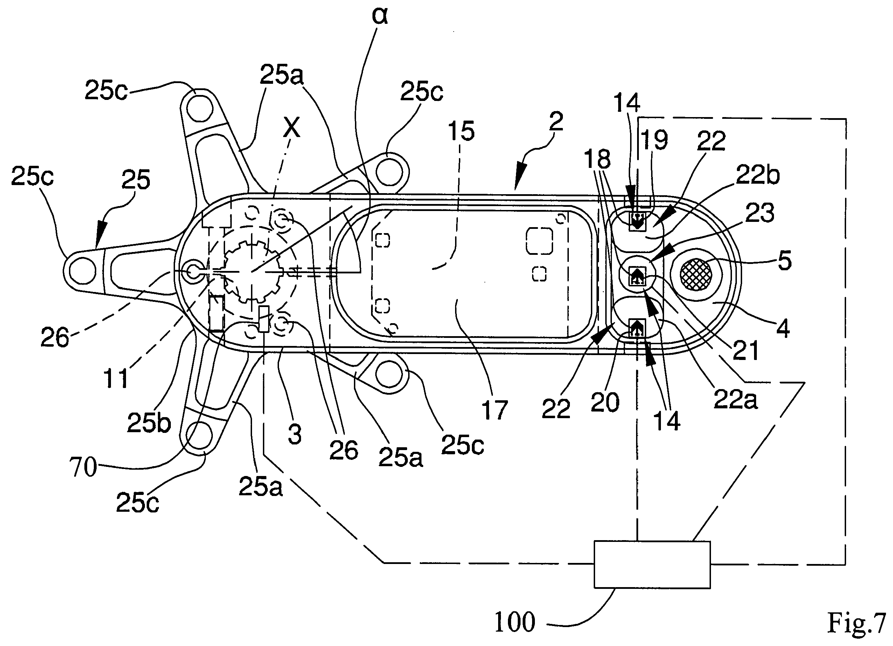

The device 1 advantageously comprises sensor means 14 (figures 6 and 7) for detecting at least an indicative parameter of the work carried out during the activating by the user, which acts on the movement system, or during the pedalling action of the cyclist using the bicycle on which the device 1 is mounted.

As can be seen in figures from 5 to 7 and 9, each pedal-crank 2, 6 is provided with a housing chamber 15 for engaging a respective electronic instrumentation 16 (figure 6) of the sensor means 14.

In particular, the instrumentation 16 which is arranged internally of the respective housing chambers 15 of the pedal-cranks 2, 6 can include, for example, a device for electrically recharging the batteries which supply the sensor means 14 and/or any signal stabilising devices, and/or signal amplifying devices and/or wireless communication devices which exploit for example Bluetooth protocols and/or programmable electronic units.

The connecting spindle 10 is preferably substantially tubular such as to enable crossing of one or more electric connectors 10a (figures 4 and 6) and/or electronic connectors between the instrumentation 16 located internally of the housing chamber 15 of each pedal-crank 2, 6.

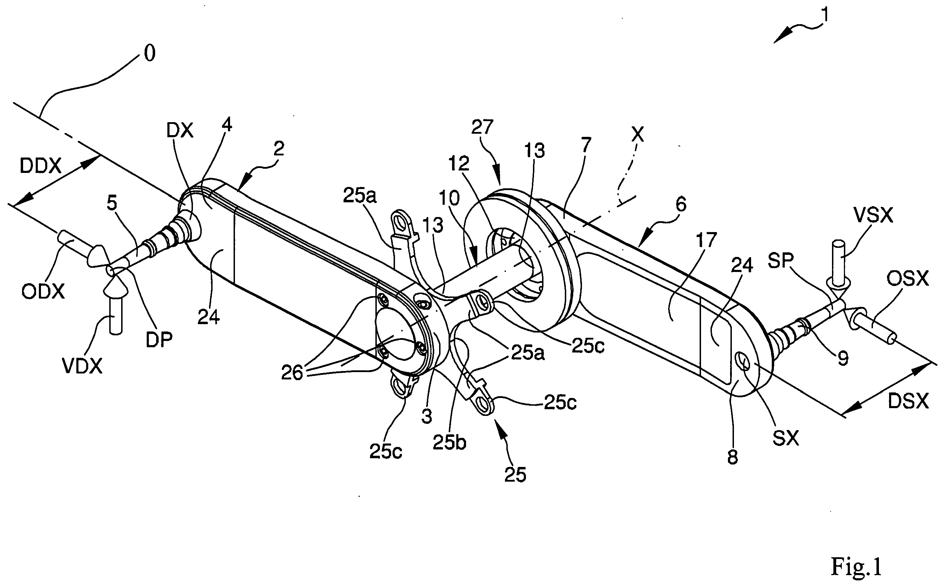

With reference to figures 1, 2, 4 and 6, the housing chamber 15 of each pedal-crank 2, 6 is closable by a respective cover 17 which protects the contents thereof, completely insulating them from the external environment and from any atmospheric agents.

The sensor means 14 are preferably arranged both on the first 2 and on the second pedal-crank 6. The sensor means 14 are able to detect and measure the intensity of the forces applied on the pedals, as well as their axis of application.

For example, the sensor means 14 are arranged and configured to detect one, two or all the following loads for each pedal-crank;
the radial component of the force transmitted by the cyclist on the pedal: this component, denoted by ODX, OSX, (ODX for the right pedal, OSX for the left pedal) in the accompanying figures of the drawings, is instant by instant directed parallel to the lever or pedal-crank 2, 6, the tangential component of the force applied on each of the pedals: this force is denoted by VDX, VSX (VDX for the right pedal, VSX for the left pedal) in the accompanying figures of the drawings, and is instant by instant directed perpendicularly to the lever or pedal-crank 2, 6, the torque MT about the development axis of the pedal-crank, generated during each full pedal stroke of the cyclist due to the fact that the point of application of the force generated by the pedal stroke is offset with respect to the axis of each pedal-crank.

Note that normally the loads described are measured for both pedal-cranks (or both levers in the case of other double-lever systems): however the device of the invention can certainly be applied to a single lever or pedal-crank.

Thanks to the measuring of the above-indicated parameters, it is also possible to calculate and monitor the power developed PDX, PSX (for example expressed in Watts) at the first and the second pedal-crank 2, 6. In order to obtain this value it will be necessary to know or pre-set the value of the length of the pedal-crank.

Further, from the monitoring of the loads indicated it is possible to derive the distance DDX, DSX between the point of application of the force on the pedal and the axis of the pedal-crank.

In a first solution, the sensor means 14 comprise a predetermined number of extensometer bridges (figures 6 and 7), in particular three for each pedal-crank, operatively engaged on each pedal-crank 2, 6. The extensometer bridges are configured and arranged such as to detect the radial and tangential components of the force generated by the cyclist on each pedal and the torque generated along the structure of the pedal-crank during the pedalling revolutionary activity.

Each set of extensometers, right and left 18, is in communication with at least a programmable electronic unit (schematically represented by the block 100), being a part of the instrumentation 16 or an instrumentation external of the device 1 destined to manage the data and parameters detected by the sensor means 14.

In more detail, the sensor means 14 are designed and able to detect, for each pedal-crank 2, 6, the distance DDX, DSX, for example expressed in millimetres, between the point of application DP, SP of the force FDX, FSX (the figures illustrate the tangential and radial components of the forces FDX and FSX, or the components ODX, VDX, OSX, VSX) produced by the cyclist on the respective pedal-crank and the engagement point (DX, ISX) of the pedal-crank to the respective pedal-crank 2, 6 (figures from 1 to 3 and 6).

Alternatively, the sensor means 14 can detect the distance between the application point DP, SP of the force FDX, FSX produced by the cyclist on the respective pedal-crank and an ideal centre (not illustrated in the figures) of thrust, previously located on the pedal-crank itself in a predetermined position.

The detection is made thanks to the measurement of the torque MT_{dx} or MTₛₓ divided by the respective tangential component VDX, VSX which as indicated above is the component, perpendicular to the longitudinal axis of the pedal-crank 2, 6 of the force applied by the cyclist on the pedal-crank. The distance DDX, DSX is the force application arm, for example expressed in mm, with respect to the longitudinal axis of the pedal-crank or the distance with respect to the centre of the pedal-crank.

The sensor means 14 can be configured such as to detect, for each pedal-crank 2, 6, the intensity of the tangential component VDX, VSX and the radial component ODX, OSX, for example expressed in Newtons, of the force FDX, FSX produced by the cyclist on the application point DP, SP locatable on the respective pedal-crank, as well as the intensity of the general force FDX, FSX produced, also expressed in Newtons as the vectorial sum of the detected components.

In this way, the sensor means 14 provide useful data for processing the progress of each pedal-stroke of the cyclist, both in relation to the efficiency of each single pedal stroke and in relation to the distribution of the thrust forces, i.e. from a top dead centre PMS to a bottom dead centre PMI of the circular motion of the respective pedal-crank, and in return, i.e. from the bottom dead centre PMI to the top dead centre PMS of the circular motion of the respective pedal-crank.

It is specified that during the course of the present description, bottom dead centre PMI and top dead centre PMS are taken to mean the point in which each pedal-crank changes direction from descent to rise, and from rise to descent.

With reference to each pedal-crank 2, 6, an efficiency parameter of the pedal-stroke can be defined. In greater detail, by efficiency is meant the ratio between the force useful for rotary motion of the pedal-cranks about the spindle 10 and the axis X, which corresponds to the tangential component VDX, VSX of the force produced by the cyclist FDX, FSX and the force produced by the cyclist FDX and FSX; the efficiency VDX/FDX or VSX/FSX is preferably expressed in a percentage value.

Naturally, the greater the tangential component VDX, VSX of the force FDX, FSX, the greater the efficiency of the pedal stroke. Ideally if the force FDX, FSX produced at any point of the pedal stroke were always directed tangentially (in other words if the force impressed by the cyclist on the pedal were always perpendicular to the axis of the pedal-crank), the detection means 14 would detect the maximum efficiency value, which would correspond to a ratio VDX/FDX (and/or VSX/FSX) of 1.

This parameter enables the cyclist to verify the prevalent thrust direction and/or return direction during his or her pedal-stroke, such as to be able to correct any positions that are not conducive to reaching the maximum pedal-stroke efficiency.

In order to enable the above-cited measurements, the sensor means 14 comprise, for each pedal-crank 2, 6 a first deformation sensor and a second deformation sensor 19, 20, preferably constituted by respective extensometer bridges, positioned such as to detect deformations in directions which are substantially perpendicular to one another (figure 7).

The first 19 and the second deformation sensor 20 of each pedal-crank 2, 6 detect the intensity of the tangential and radial components VDX, VSX, ODX, OSX of each resultant force produced FDX, FSX on the respective pedal, from a vectorial summing of which the intensity thereof can be calculated.

The first and second deformation sensors 19, 20 of each pedal-crank 2, 6 are connected to a programmable electronic unit for data management and parameters detected from the sensor means 14.

The sensor means 14 comprise, for each pedal-crank 2, 6, a third deformation sensor 21, in particular a respective extensometer bridge, which is positioned and configured such as to detect the torque with respect to the axis of the lever generated by the resultant force FDX, FSX (or more precisely the useful component VDX, VSX thereof) applied by the cyclist on the pedals. The totality of the three deformation sensors 19, 20, 21 of each pedal-crank 2, 6 advantageously makes up the respective set of extensometers 18, which is able to detect the radial and tangential components of the applied force and the respective torque on the basis of the data obtainable from the detecting of the deformations along the three perpendicular axes of the deformation sensors 19,20,21.

The device 1 can further comprise an angular position sensor of the pedal-crank (from a constructional point of view the sensor can be realised using a Hall sensor). Thanks to the fact of knowing the angular position of the pedal-crank over a period of time, and thanks to the parameters detected by the sensor means 14, a processing unit (not illustrated but in any case connected both to the sensor means 14 and the angular position sensor) is programmed to calculate and possibly represent, for each pedal-crank 2, 6, the developed power values PDX, PSX both during the rise of the respective pedal from the bottom dead centre PMI to the top dead centre PMS and the descent of the respective pedal from the top dead centre PMS to the bottom dead centre PMI. From the reading of this data it is thus possible to calculate, for each pedal-crank 2, 6, the ratio KDX, KSX between the values of the developed power PDX, PSX in rising and descent of each pedal with respect to the overall value of the power developed in an entire revolution. In this way the work performed by the cyclist can be verified both in relation to the thrust power and in relation to the return power, both overall and with respect to each leg.

Note that the values of K express the symmetry of the pedal stroke between descent and rise of the pedal.

As mentioned, the device 1 can comprise, apart from the sensor means 14, one or more sensors 70 predisposed to detect the rotation angle RP, for example expressed in degrees, or the instantaneous angular position of each pedal-crank with respect to a reference. The sensor or sensors of rotation angle are connected to the control unit which is thus also programmed to determine the angular velocity, for example expressed in revolutions per minute GP, of the pedal-cranks 2, 6. Further it is also possible to verify and calculate the value, for example expressed in Watts per hour, of the energy RNDX, ENSX produced by each pedal-crank 2, 6 and the total energy ENT produced by the cyclist.

In addition, the device 1 can comprise one or more of the following sensors also connected and in communication with the control unit 100:
a sensor of the rotation angle associated to one or both the wheels; thanks to this sensor or sensors the unit 100 is configured to calculate the revolutions per minute of at least a wheel of the bicycle, as well as the instantaneous and average velocity, for example expressed in kilometres per hour;
a sensor of the heartbeat rate of the cyclist, for example expressed in number of pulsations per minute;
a sensor of the gradient of the ground the bicycle is running on, for example expressed in a percentage.

It is also possible to add other parameters which might be deemed useful or necessary.

With reference to figures from 5 to 9, each pedal-crank 2, 6 comprises at least a seating 22, preferable two or more, located at the respective free end 3, 8, for housing the above-mentioned set of extensometers 18.

For example, each pedal-crank 2, 6 is provided with a support surface 23 for supporting at least one of the above-mentioned deformation sensors 19.

In accordance with the illustrated embodiment, each pedal-crank 2, 6 exhibits two seatings 22a, 22b for engaging two 20, 21 of the three comprised deformation sensors 19, 20 which make up the set of extensometers 18 and a support surface 23, interposed between the two seatings 22a, 22b on which the third deformation sensor 21 is engaged.

As can be seen in figures from 5 to 9, which are an example embodiment of the measuring system, the two seatings 22a, 22b of each pedal-crank 2, 6 are defined by two respective through-openings afforded through the structure of the respective pedal-crank 2, 6, and each exhibits a substantially oval shape. The support surface 23 extends between a seating 22a and the other 22b in a lowered position with respect to the structure of the pedal-crank 2, 6, such as to be situated internally thereof.

With reference to figures 1, 2 and 4, both the seatings 22a, 22b and the support surfaces 23 of each pedal-crank 2, 6 are coverable by at least a covering cap 24 which insulates them from the external environment, protecting the sensor means 14 from damaging atmospheric agents.

As can be seen in figures from 1 to 7, the device 1 is further provided with at least a coupling element 25 which is preferably fixable to the first pedal-crank 2, via one or more threaded connecting elements 26 and/or to the connecting spindle 10 at the first pedal-crank 2 such as to rotatingly unite the first pedal-crank and consequently the connecting spindle 10 and the second pedal-crank 6, to at least a gearing (not illustrated as of known type) of a transmission crown (not illustrated) of the transmission system of the bicycle on which the device 1 is mounted.

Still with reference to figures from 1 to 7, the coupling element 25 is provided with a plurality of rays 25a which extend from a substantially circular central portion 25b, each exhibiting a free end 25c destined to engage the crown of the bicycle, by means of respective threaded connecting elements (not illustrated).

The coupling element 25 can be interchangeable with other coupling elements 25 exhibiting identical central portions 26 and having rays 25a of different sizes in order to enable engaging the device 1 on bicycles which exhibit gearings of different dimensions.

In addition, it is further possible for the coupling element 25 to exhibit rays 25a of different lengths in order to enable engagement of the coupling element 25 on gearings having different dimensions.

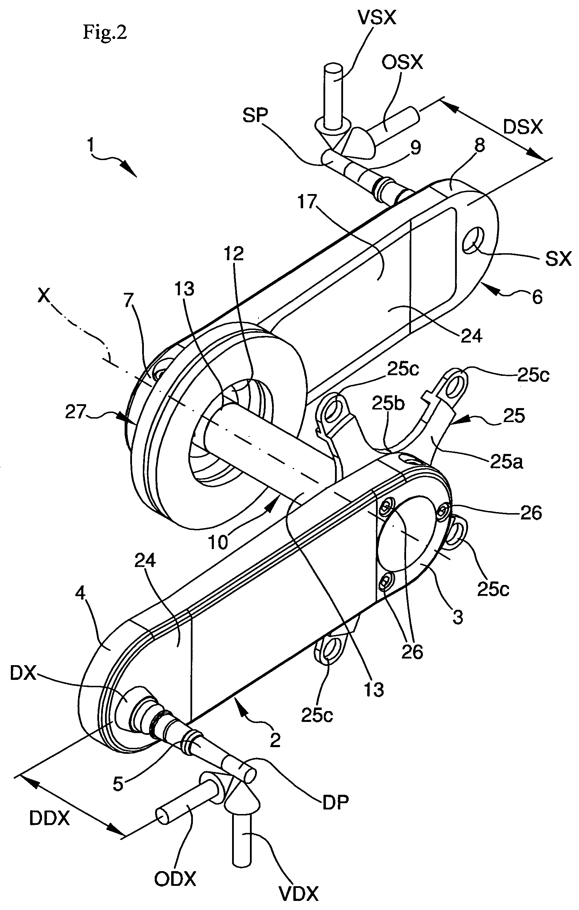

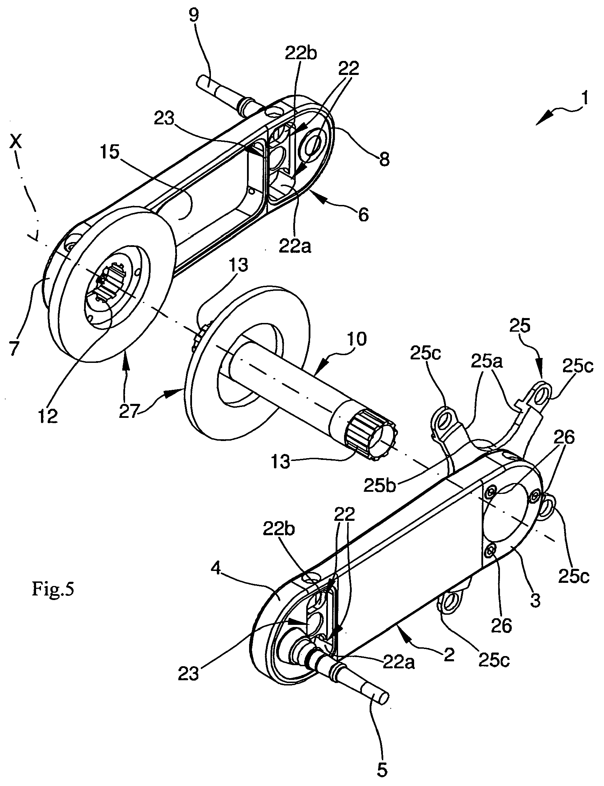

As can be seen in figures 2, 5 and 6, the device is further provided with a generator 27 (which can be used to replace a normal electric battery-charger supplied from the grid) for electrically supplying the sensor means 14 and the instrumentation 16 of the pedal-cranks 2, 6.

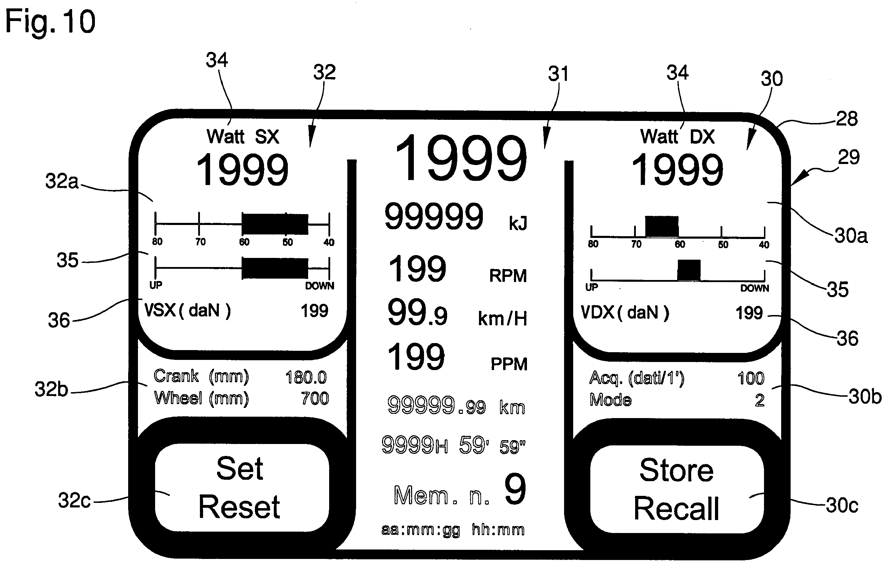

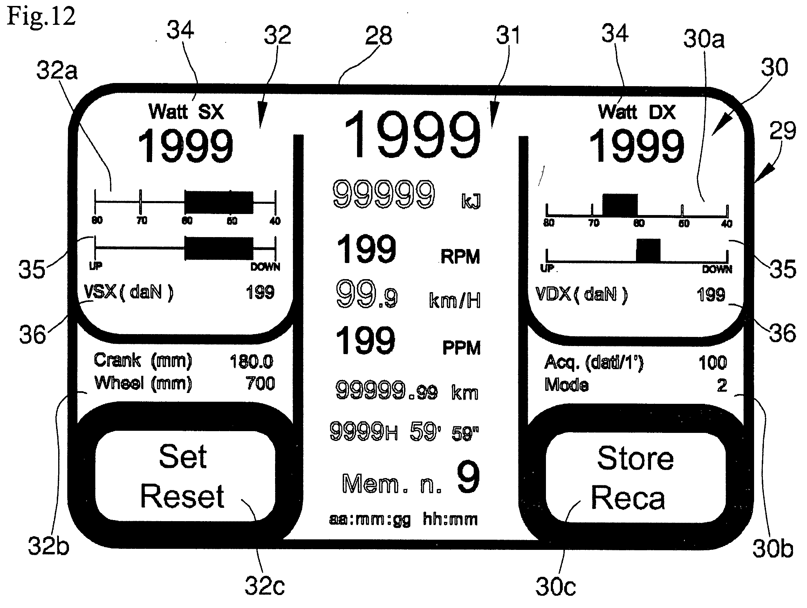

With reference to figures 10, 11 and 12, three examples are illustrated of a quadrant 28 of an electronic control and management device 29 of the data detected by the above-described device 1.

In particular, the quadrant 28 is sub-divided into three vertical strips 30, 31, 32 arranged respectively as follows: the first 30 on the right, the second 31 in the centre and the third 32 on the right.

The first and the third strip 30, 32 are in turn sub-divided horizontally into the sectors 30a, 32a, 30b, 32b, 30c, 32c arranged respectively: the first 30a, 33a in the upper part of the quadrant 28; the second 30b, 32b, substantially in an intermediate part; and the third 30c, 32c in the lower part.

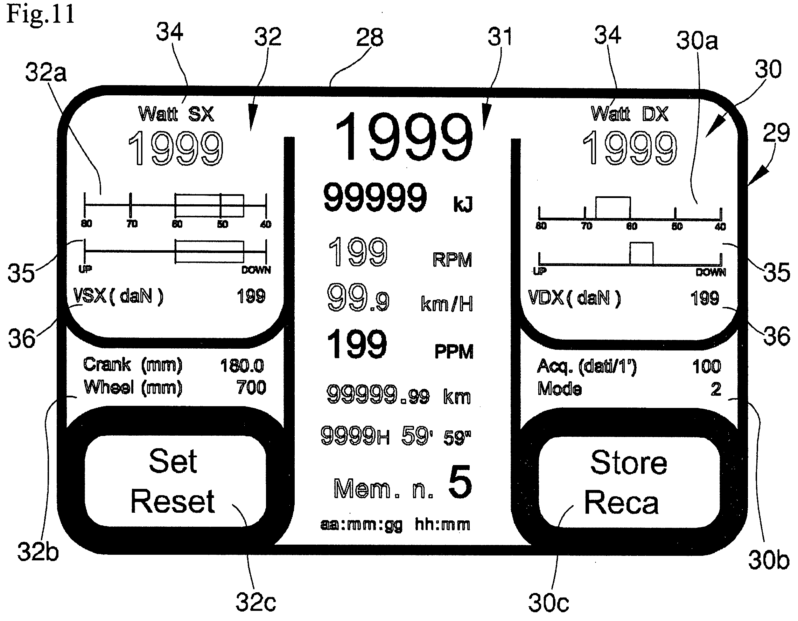

As can be seen in figures from 10 to 12, the first sectors 30a, 32a of the first and the third strip 30, 32 both graphically and numerically report the values 34 of the power PDX, PSX developed by the cyclist in each leg during cycling activity, the graphic progression 35 (figure 10) and scalar progression (figure 11) of the pedal-stroke offset (i.e. the distance between the real point of application and the ideal of the thrust force on each pedal-crank), the graphic progression (figure 10) and the scalar progression (figure 11) of the ratio between the power values and the tangential component VDX, VSX, i.e. the useful force, the force produced by the cyclist on respective pedals, in scalar value 36 of the force.

The second sector 30b of the first strip 30 reports the functioning modes of the control device 2, in particular in terms of the number of data items acquisition per minute and the setting of the monitoring, while the third sector 30c reports the memorisation commands and memory recalls, commandable by means of pressing the quadrant 28 at the respective point.

The second sector 32b of the third strip 32 reports the length of the pedal-crank (settable) and the spoke (settable) of the wheel, while the third sector 32c comprises the setting and zeroing commands, performed by digital pressure.

The second strip 31 enables visualisation of a series of useful parameters for the cyclist during the activity.

As can be seen in figures from 10 to 12, some parameters and/or data can be displayed with respect to others, which are not displayed and are maintained temporarily hidden (these are denoted by broken lines in figures from 10 to 12).

In a possible setting, by way of example, comprises contemporaneously pressing for a few seconds on the left key (SET/RESET) and the right key (STORE/MEM REC), after which the flashing datum can be entered (for example from 1 to 100 data per minute in step 1); after a few seconds the flashing pedal-crank length can be entered (for example from 160 mm to 180 mm with a 2.5 step) and then the flashing radius of the wheel (for example from 400 mm to 800 mm with a 5 step), then storing the values.

In continuous functioning without memorisation the right key is pressed until the memory number 0 appears.

To zero the values, the left key is pressed for a few seconds. To store, it is sufficient to press on the right key for a few seconds and the data are sent to the first free memory; by newly pressing the right key memorisation is interrupted. By then pressing the right key in sequence the data from the desired memory can be viewed.

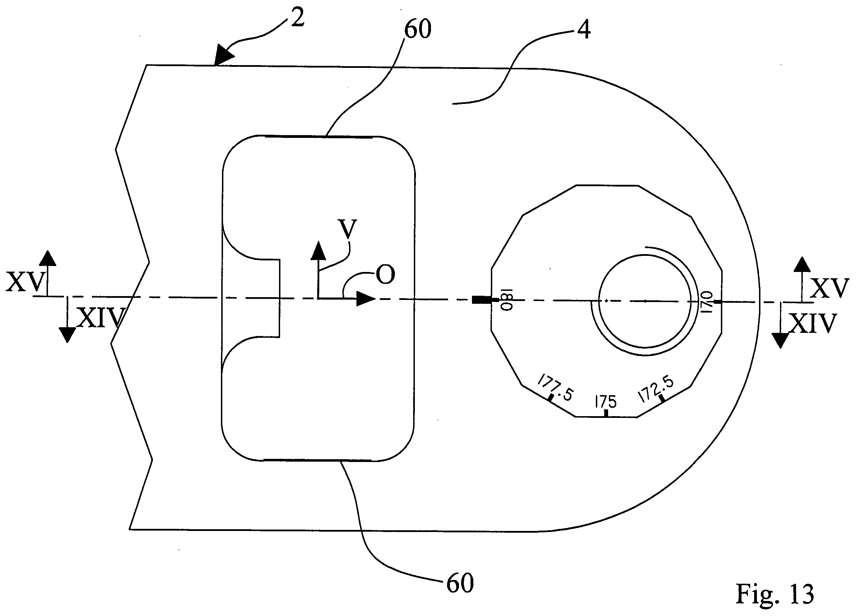

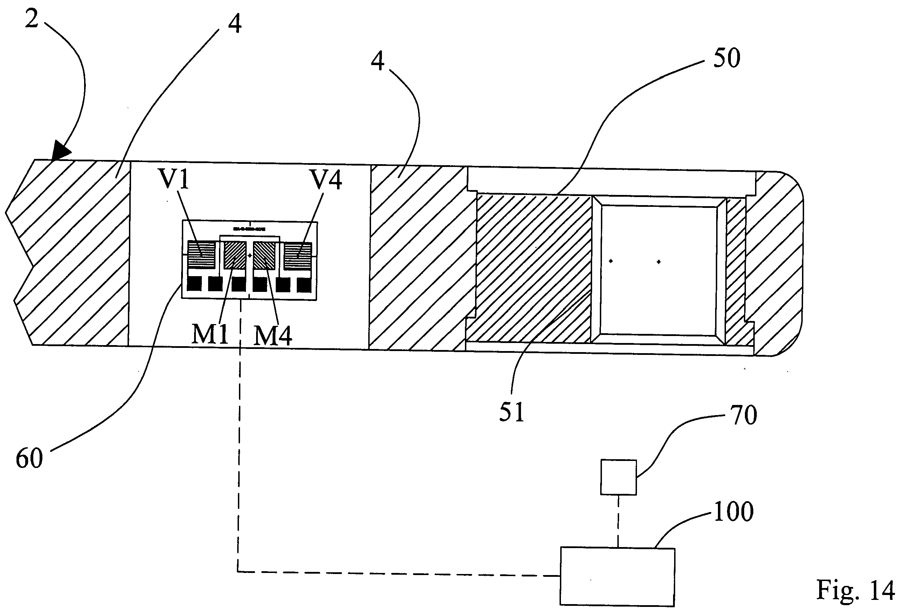

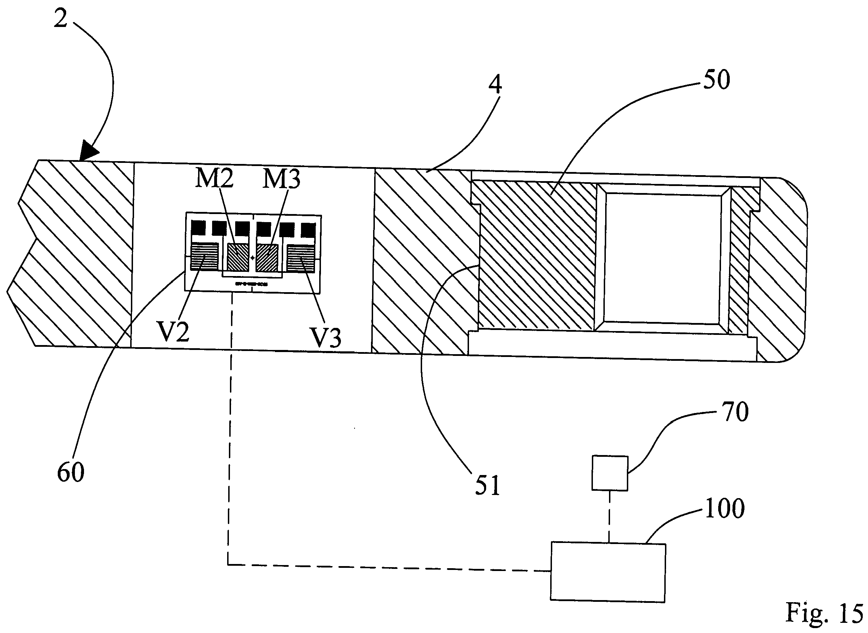

With reference to figures 13-15, the terminal portion of the pedal-cranks 2, 6 are shown, of a bicycle (for example having a like structure to the one already herein described) in a further embodiment. The terminal portions can for example be those shown in the pedal-crank system of figure 1. In this case, the device 1 comprises sensor means 14 operating at a terminal zone 4, 8 of each pedal-crank. The sensor means comprise bridges 60 of extensometers V1, V2, V3, V4 and M1, M2, M3, M4 in which:
- V measures the tangential Force, i.e. the force directed along the axis v perpendicular to the pedal-crank ( VDX and VSX ),
- M measures the Torque M about the axis O, which is = V * D (VDX*DDX and VSX*DSX )

For each of the two pedal-cranks, the instrumentation scheme and the cabling for obtaining measurements V and M are as follows:
- Force V: the extensometers V1, V2, V3 and V4 are connected by Wheatstone bridges such as to be sensitive only to force V, without being influenced by the other loads acting on the pedal-crank, which are: :
   - the torque M about the axis O
   - the force O ( ODX and OSX )
   - the axial force acting along the pedal axis
- Torque M: the extensometers M1, M2, M3 and M4 are connected by Wheatestone bridges such as to be sensitive only to the torque M, without being influenced by the other loads acting on the pedal-crank, which are: :
   - the force O ( ODX and OSX )
   - the axial force acting along the pedal axis

From these two readings the unit 100 is programmed to calculate the values of D = M / V.

Note that in a further variant the extensometer bridges can be configured such as to determine the radial component of the force ODX (and/or OSX) directed along the axis of the pedal-crank and the flexion torque generated by the force on the pedal-crank in order to determine in any case the distance of the application point of the force impressed by the user with respect to the rotation plane of the pedal-crank.

Note also that the pedals or thrust elements 5 and 9 can be engaged to the ends of the levers 2, 6 after interposing of an adapter 50 having an externally-prismatic radial surface, having a polygonal profile or in any case shaped such as to insert without any possibility of rotating in a main seating 51 complementarily-shaped thereto and present on the lever 2, 6.

The adapter exhibits, in an off-centre position, an auxiliary seating 52 for receiving the elements 5, 9.

Thanks to the eccentricity between the auxiliary seating and the main seating, and thanks to the prismatic surface of the adapter, it is possible to position the adapter in a plurality of different angular positions by varying the position of the pedal or other thrust element axis with respect to the rotation axis X of the spindle.

The present invention obviates one or more of the drawbacks encountered by the prior art, and attains important advantages.

Firstly, the above-described device enables an accurate analysis of the cyclist's pedal stroke. This can be measured on either the right leg or the left leg.

The device is able to provide a series of data, right and/or left, relating to the power developed by the cyclist and the useful power for each pedal stroke.

Further, the device can analyse the right and/or left pedal stroke during a descent and a rise of the respective pedal.

Also significant is the fact that the device can provide an accurate analysis of the cyclist's posture, meaning the position and application of the forces on the respective pedal during the whole physical activity of the cyclist, enabling him or her to correct his or her erroneous postural habits which might place in jeopardy the full effectiveness of the pedal stroke.

As has already been mentioned, the device of the invention can be advantageously used in general terms for human-propelled movement systems, enabling detection of indicative parameters of the physical activity required for human propulsion (also for example in relation to a sailing boat's winch moved using the upper limbs or other load-moving devices using two or more levers keyed on a same spindle).

## Claims

1. A device for detecting significant parameters of physical activity, the device (1) comprising:
a first lever (2) operatively engageable to a frame of a human-propelled movement system, the first lever (2) exhibiting a free end (4) for engaging with a first thrust element emerging transversally to a main development axis of the first lever (2);
a second lever (6) operatively engageable to the frame of a human-propelled movement system on an opposite side thereof with respect to the first lever (2), the second lever (6) exhibiting a free end (8) for engaging with a second thrust element emerging transversally to a main development axis of the second lever (6);
a connecting spindle (10) interposed between the levers (2, 6) for setting the levers (2, 6) in rotation at least about an axis (X), the connecting spindle (10) developing along the axis (X) that is transversal to the main development axis of the first and second lever (2, 6) and being predisposed to at least partially cross a frame of the human-propelled movement system;
sensor means (14) for detecting at least a significant parameter of the work performed during the rotation of at least one of the levers of the device about the axis (X),
the sensor means (14) are configured such as to determine the value of:
at least a load selected from a group comprising: a resultant force transmitted by a user on at least one of the thrust elements, a radial component (ODX, OSX) of the resultant force, which radial component is instant by instant directed parallel to the respective lever (2, 6), a tangential component (VDX, VSX) of the resultant force, which tangential component is instant by instant directed perpendicularly to the lever (2, 6),
and at least a torque with respect to a predetermined axis generated by the resultant force or by one of the tangential and radial components, **characterised in that**
the sensor means are connected to a programmed control unit for calculating a distance (DDX, DSX) between a point of application of the resultant force on the thrust element and the development axis of the respective lever, on the basis of the measured value of the load and the measured value of the torque.

2. The device of the preceding claim, wherein the sensor means (14) are configured such as to determine the tangential component (VDX, VSX) of the resultant force, and the torque (MT) generated by the tangential component with respect to the main development axis (O) of the lever, the control unit being programmed in order to calculate the distance (DDX, DSX) as a ratio between the value of the torque and the value of the tangential component.

3. The device of any one of the preceding claims, wherein the sensor means (14) are configured such as to determine the radial component (ODX, OSX) of the resultant force, and the flexion torque generated by the radial component along the main development axis (O) of the lever, the control unit being programmed to calculate the distance (DDX, DSX) as a ratio between the value of the flexion torque and the value of the radial component.

4. The device of any one of the preceding claims, wherein identical sensor means (14) are arranged on both the first and second levers, and comprise:
at least a set of extensometers (18) operatively engaged on each lever (2, 6) in order to detect at least the torque (MT),
at least a set of extensometers (18) operatively engaged on each lever (2, 6) in order to detect at least the radial component (OSX, VDX),
at least a set of extensometers (18) operatively engaged on each lever (2, 6) in order to detect at least the axial component (VSX, VDX),
each set of extensometers (18) is in electronic communication with at least a programmable control unit, configured for:
receiving the measurements detected by the sensor means (14), and
calculating, for each lever (2, 6), the distance (DDX, DSX) between the application point (DP, SP) of the force (FDX, FSX) produced by the user on the respective thrust element and the engagement point (IDX, ISX) of the thrust element on the respective lever (2, 6), or the distance between the application point (DP, SP) of the force (FDX, FSX) produced by the user on the respect thrust element and an ideal thrust centre located on the thrust element at a predetermined position.

5. The device of one or more of the preceding claims, wherein the sensor means (14) are destined to detect, for each lever or pedal-crank mechanism (2, 6), the intensity of the tangential component (VDX, VSX) and radial component (ODX, OSX) of the resulting force (FDX, FSX) produced by the user on the respective thrust element and the intensity thereof.

6. The device of claim 4 or 5, wherein the sensor means (14) comprise, for each lever (2, 6):
a first deformation sensor (19) and a second deformation sensor (20), the first and second deformation sensors (19, 20) of each lever (2, 6) respectively detecting the tangential component (VDX, VSX) and radial component (ODX, OSX) of the resultant force (FDX, FSX) produced by the user at the respective thrust element, and
a third deformation sensor 821) for measuring the torque (MT),
the first, second and third sensors being in electronic communication with the programmable control unit.

7. The device of one or more of previous claims, wherein the control unit is configured such as to determine an efficiency parameter as a ratio between the tangential component (VDX, VSX) of the resultant force (FDX, FSX) produced by the user on a respective thrust element and the value of the resultant force (FDX, FSX) produced by the user on the thrust element.

8. The device of one or more of previous claims, comprising one or more sensors (70) predisposed to detect the rotation angle or the instantaneous angular position of each lever with respect to a reference, in which the rotation angle sensor or sensors are connected to the control unit, the control unit being programmed to determine the angular velocity of the levers (2, 6).

9. The device of the preceding claim, wherein the control unit is programmed for:
determining, for each lever and on the basis of the signal coming from the rotation angle sensor or angular position sensor, when each lever is in a rising phase or a descending phase, and
calculating the values of the power developed (PDX, PSX) both during the rise of the respective thus element from a bottom dead centre (PMI) to a top dead centre (PMS) and during the descent of the respective thrust element from the top dead centre (PMS) to the bottom dead centre (PMI).

10. The device of claim 9, wherein the control unit is configured to calculate, for each lever, a ratio (KDX, KSX) between the value of the developed power (PDX, PSX) during the rising phase or the descending phase of the respective thrust element and the overall power developed during a revolution of the respective lever.

11. The device of one or more of the preceding claims, wherein the levers (2, 6) are identical, each lever (2, 6) exhibiting:
a connecting end (3, 7) opposite the respective free end (4, 8), provided with an engagement seating (11, 12), optionally cogged, for axial insertion of an end (13), optionally cogged, of the connecting spindle (10);
a housing chamber (15) for a respective electronic instrumentation (16) of the sensor means (14), the housing chamber (15) being closable by a respective cover (17);
at least a seating (22), preferably two, for housing at least a set of extensometers (18) of the sensor means (14);
at least a surface (23) for supporting the deformation sensors (19, 20, 21), the seating (22) and the support surface (23) being coverable by at least a covering cap (24);
at least an engaging seating (4a, 8a), at the free end (4, 8), for operative fastening of the respective thrust element, in particular the connecting spindle (10) being substantially tubular in order to enable crossing of one or more electrical and/or electronic connectors (10a) between the electronic instrumentation (16) located internally of the housing chamber (17) of each lever (2, 6).

12. The device of one or more of the preceding claims, wherein the first and second levers respectively comprise a first and a second pedal-crank, and wherein the first and the second thrust elements comprise a first and a second pedal.

13. The device of one or more of the preceding claims, wherein at least a coupling element (25) is fixable to the first lever or pedal-crank (2) and/or the connecting spindle (10), in particular at the first lever or pedal-crank (2), in order to join in rotation the levers or pedal-cranks (2, 6) to at least a transmission element of the motion of the human-propelled movement system, in particular the coupling element (25) being provided with a plurality of rays (25a) extending from a central portion (25b) and each exhibiting a free end (25c) destined to engage with a crown of a bicycle.

14. A bicycle comprising a device as in any one of the preceding claims.

## Patentansprüche

1. Vorrichtung zum Erkennen von signifikanten Parametern körperlicher Aktivität, wobei die Vorrichtung (1) umfasst:
einen ersten Hebel (2), operativ eingreifbar an einem Rahmen eines von Menschen angetriebenen Bewegungssystems , wobei der erste Hebel (2) ein freies Ende (4) zum Eingreifen mit einem ersten Schubelement besitzt, das quer zu einer Hauptentwicklungsachse des ersten Hebels (2) heraustritt;
einen zweiten Hebel (6), operativ eingreifbar am Rahmen eines von Menschen angetriebenen Bewegungssystems an einer gegenüber dem ersten Hebel (2) entgegengesetzten Seite davon , wobei der zweite Hebel (6) ein freies Ende (8) zum Eingreifen mit einem zweiten Schubelement besitzt, das quer zu einer Hauptentwicklungsachse des zweiten Hebels (6) heraustritt;
eine Verbindungswelle (10), die sich zwischen den Hebeln (2, 6) befindet, um die Hebel (2, 6) in Rotation mindestens um eine Achse (X) zu setzen, wobei die Verbindungswelle (10) sich entlang der quer zur Hauptentwicklungsachse des ersten und des zweiten Hebels (2, 6) liegenden Achse (X) entwickelt und dazu vorgesehen ist, ein Rahmen des von Menschen angetriebenen Bewegungssystems mindestens teilweise zu kreuzen;
Sensormittel (14) zum Erkennen mindestens eines signifikanten Parameters der während der Rotation des mindestens eines der Hebel der Vorrichtung um die Achse (X) geleisteten Arbeit,
wobei die Sensormittel (14) konfiguriert sind zur Bestimmung des Wertes von:
mindestens einer Last ausgewählt aus einer Gruppe umfassend: eine resultierende Kraft, die von einem Benutzer auf mindestens eines der Schubelemente übertragen wird, eine radiale Komponente (ODX, OSX) der resultierenden Kraft, wobei die radiale Komponente in jedem Moment parallel zum jeweiligen Hebel (2, 6) gerichtet ist, eine tangentiale Komponente (VDX, VSX) der resultierenden Kraft, wobei die tangentiale Komponente in jedem Moment orthogonal zum Hebel (2, 6) gerichtet ist,
und mindestens einem Drehmoment gegenüber einer vorgegebenen Achse, das durch die resultierende Kraft oder durch eine der tangentialen und radialen Komponenten erzeugt wird, **dadurch gekennzeichnet, dass** die Sensormittel mit einer programmierten Steuereinheit verbunden sind zum Berechnen eines Abstands (DDX, DSX) zwischen einem Angriffspunkt der resultierenden Kraft am Schubelement und der Entwicklungsachse des jeweiligen Hebels basierend auf dem gemessenen Lastwert und dem gemessenen Drehmomentwert.

2. Vorrichtung nach dem vorhergehenden Anspruch, wobei die Sensormittel (14) konfiguriert sind zum Bestimmen der tangentialen Komponente (VDX, VSX) der resultierenden Kraft und des von der tangentialen Komponente gegenüber der Hauptentwicklungsachse (O) des Hebels erzeugten Drehmoments (MT), wobei die Steuereinheit programmiert ist zum Berechnen des Abstands (DDX, DSX) als Verhältnis zwischen dem Drehmomentwert und dem Wert der tangentialen Komponente.

3. Vorrichtung nach einem der vorhergehenden Ansprüche, wobei die Sensormittel (14) konfiguriert sind zum Bestimmen der radialen Komponente (ODX, OSX) der resultierenden Kraft und des von der radialen Komponente entlang der Hauptentwicklungsachse (O) des Hebels erzeugten Biegemoments, wobei die Steuereinheit programmiert ist zum Berechnen des Abstands (DDX, DSX) als Verhältnis zwischen dem Biegemomentwert und dem Wert der radialen Komponente.

4. Vorrichtung nach einem der vorhergehenden Ansprüche, wobei identische Sensormittel (14) sowohl am ersten als auch am zweiten Hebel angeordnet sind und umfassen:
mindestens einen Satz an Dehnungsmessern (18), operativ eingegriffen an jedem Hebel (2, 6), um mindestens das Drehmoment (MT) zu erkennen,
mindestens einen Satz an Dehnungsmessern (18), operativ eingegriffen an jedem Hebel (2, 6), um mindestens die radiale Komponente (OSX, ODX) zu erkennen,
mindestens einen Satz an Dehnungsmessern (18), operativ eingegriffen an jedem Hebel (2, 6), um mindestens die axiale Komponente (VSX, VDX) zu erkennen,
wobei jeder Satz an Dehnungsmessern (18) mit mindestens einer programmierbaren Steuereinheit in elektronischer Kommunikation steht, die konfiguriert ist zum:
Empfangen der von den Sensormitteln (14) erfassten Messungen, und
Berechnen, für jeden Hebel (2, 6), des Abstands (DDX, DSX) zwischen dem Angriffspunkt (DP, SP) der vom Benutzer am jeweiligen Schubelement erzeugten Kraft (FDX, FSX) und der Eingriffsstelle (IDX, ISX) des Schubelementes am jeweiligen Hebel (2, 6), oder des Abstands zwischen dem Angriffspunkt (DP, SP) der vom Benutzer am jeweiligen Schubelement erzeugten Kraft (FDX, FSX) und einem idealen Schubzentrum, das sich am Schubelement an einer vorbestimmten Position befindet.

5. Vorrichtung nach einem oder mehreren der vorhergehenden Ansprüche, wobei die Sensormittel (14) vorgesehen sind zum Erkennen, für jeden Hebel oder Pedal-Kurbel-Mechanismus (2, 6), der Stärke der tangentialen Komponente (VDX, VSX) und radialen Komponente (ODX, OSX) der vom Benutzer am jeweiligen Schubelement erzeugten, resultierenden Kraft (FDX, FSX) und deren Stärke.

6. Vorrichtung nach Anspruch 4 oder 5, wobei die Sensormittel (14) für jeden Hebel (2, 6) umfassen:
einen ersten Verformungssensor (19) und einen zweiten Verformungssensor (20), wobei die ersten und zweiten Verformungssensoren (19, 20) jedes Hebels (2, 6) jeweils die tangentiale Komponente (VDX, VSX) und radiale Komponente (ODX, OSX) der vom Benutzer am jeweiligen Schubelement erzeugten, resultierenden Kraft (FDX, FSX) erfassen, und
einen dritten Verformungssensor (821) zum Messen des Drehmoments (MT),
wobei die ersten, zweiten und dritten Sensoren mit der programmierbaren Steuereinheit in elektronischer Kommunikation stehen.

7. Vorrichtung nach einem oder mehreren der vorhergehenden Ansprüche, wobei die Steuereinheit konfiguriert ist zum Bestimmen eines Wirkungsparameters als Verhältnis zwischen der tangentialen Komponente (VDX, VSX) der vom Benutzer an einem jeweiligen Schubelement erzeugten, resultierenden Kraft (FDX, FSX) und dem Wert der vom Benutzer am Schubelement erzeugten, resultierenden Kraft (FDX, FSX).

8. Vorrichtung nach einem oder mehreren der vorhergehenden Ansprüche, umfassend einen oder mehrere Sensoren (70), die vorgesehen sind zum Erkennen des Rotationswinkels oder der momentanen Winkelstellung jedes Hebels in Bezug auf einen Bezugspunkt, wobei der Rotationswinkelsensor oder die -sensoren mit der Steuereinheit verbunden sind, wobei die Steuereinheit programmiert ist zum Bestimmen der Winkelgeschwindigkeit der Hebel (2, 6).

9. Vorrichtung nach dem vorhergehenden Anspruch, wobei die Steuereinheit programmiert ist zum:
Bestimmen, für jeden Hebel und basierend auf dem vom Rotationswinkelsensor oder Winkelstellungssensor kommenden Signal, wenn jeder Hebel in einer steigenden Phase oder in einer sinkenden Phase ist, und
Berechnen der Werte der entwickelten Leistung (PDX, PSX) sowohl während des Anstiegs des jeweiligen Schubelementes von einem unteren Totpunkt (PMI) zu einem oberen Totpunkt (PMS) als auch während des Absinkens des jeweiligen Schubelementes vom oberen Totpunkt (PMS) zum unteren Totpunkt (PMI).

10. Vorrichtung nach Anspruch 9, wobei die Steuereinheit konfiguriert ist zum Berechnen, für jeden Hebel, eines Verhältnisses (KDX, KSX) zwischen dem Wert der entwickelten Leistung (PDX, PSX) während der steigenden Phase oder der sinkenden Phase des jeweiligen Schubelements und der Gesamtleistung, die während einer Umdrehung des jeweiligen Hebels entwickelt wird.

11. Vorrichtung nach einem oder mehreren der vorhergehenden Ansprüche, wobei die Hebel (2, 6) identisch sind, wobei jeder Hebel (2, 6) aufweist:
ein Verbindungsende (3, 7) gegenüber dem jeweiligen freien Ende (4, 8), das mit einem, optional gezahnten, Eingriffssitz (11, 12) versehen ist, zum axialen Einführen eines, optional gezahnten, Endes (13) der Verbindungswelle (10);
eine Aufnahme (15) für eine jeweilige elektronische Instrumentierung (16) der Sensormittel (14), wobei die Aufnahmekammer (15) durch einen jeweiligen Deckel (17) verschließbar ist;
mindestens einen Sitz (22), bevorzugt zwei Sitze, zum Aufnehmen mindestens eines Satzes an Dehnungsmessern (18) der Sensormittel (14);
mindestens eine Fläche (23) zum Tragen der Verformungssensoren (19, 20, 21), wobei der Sitz (21) und die Tragfläche (23) durch mindestens eine Deckkappe (24) abdeckbar sind;
mindestens einen Eingriffssitz (4a, 8a) am freien Ende (4, 8) zum operativen Befestigen des jeweiligen Schubelementes, wobei insbesondere die Verbindungswelle (10) im Wesentlichen röhrenförmig ist, um einem oder mehreren elektrischen und/oder elektronischen Verbindern (10a) zu ermöglichen, zwischen der elektronischen, im Inneren des Aufnahmeabteils (17) jedes Hebels (2, 6) liegenden Instrumentierung (16) zu verlaufen.

12. Vorrichtung nach einem oder mehreren der vorhergehenden Ansprüche, wobei die ersten und zweiten Hebel eine erste bzw. eine zweite Pedal-Kurbel umfassen, und wobei die ersten und zweiten Schubelemente ein erstes und ein zweites Pedal umfassen.

13. Vorrichtung nach einem oder mehreren der vorhergehenden Ansprüche, wobei mindestens ein Kopplungselement (25) am ersten Hebel oder an der ersten Pedal-Kurbel (2) und/oder an der Verbindungswelle (10) befestigbar ist, insbesondere am ersten Hebel oder an der ersten Pedal-Kurbel (2), um die Hebel oder Pedal-Kurbel (2, 6) zusammen mit mindestens einem Übertragungselement der Bewegung des von Menschen angetriebenen Bewegungssystems in Rotation zu versetzen, wobei insbesondere das Kopplungselement (25) mit einer Vielzahl von Speichen (25a) ausgestattet ist, die sich von einem Zentralabschnitt (25b) erstrecken und jede davon ein freies Ende (25c) zum Eingreifen mit einem Kranz eines Fahrrads aufweist.

14. Fahrrad umfassend eine Vorrichtung nach einem der vorhergehenden Ansprüche.

## Revendications

1. Dispositif pour détecter des paramètres significatifs d'une activité physique, le dispositif (1) comprenant :
un premier levier (2) susceptible d'être engagé en fonctionnement avec un cadre d'un système de mouvement à propulsion humaine, le premier levier (2) présentant une extrémité libre (4) à engager avec un premier élément de poussée qui émerge transversalement à un axe de développement principal du premier levier (2) ;
un second levier (6) susceptible d'être engagé en fonctionnement avec le cadre d'un système de mouvement à propulsion humaine sur un côté opposé de celui-ci par rapport au premier levier (2), le second levier (6) présentant une extrémité libre (8) à engager avec un second élément de poussée qui émerge transversalement à un axe de développement principal du second levier (6) ;
une broche de connexion (10) interposée entre les leviers (2, 6) pour mettre les leviers (2, 6) en rotation au moins autour d'un axe (X), la broche de connexion (10) se développant le long de l'axe (X) qui est transversal à l'axe de développement principal du premier et du second levier (2, 6) et qui est prédisposé à croiser au moins partiellement un cadre du système de mouvement à propulsion humaine ;
des moyens capteurs (14) pour détecter au moins un paramètre significatif du travail fourni pendant la rotation de l'un au moins des leviers du dispositif autour de l'axe (X),
les moyens capteurs (14) sont configurés de manière à déterminer la valeur de :
au moins une charge sélectionnée parmi un groupe comprenant : une force résultant transmise par un utilisateur sur l'un au moins des éléments de poussée, une composante radiale (ODX, OSX) de la force résultante, cette composante radiale étant dirigée instant par instant parallèlement au levier respectif (2, 6), une composante tangentielle (VDX, VSX) de la force résultante, cette composante tangentielle étant dirigée instant par instant perpendiculairement au levier (2, 6),
et au moins un couple par rapport à un axe prédéterminé généré par la force résultante ou par l'une des composantes tangentielle et radiale, **caractérisé en ce que**
les moyens capteurs sont connectés à une unité de commande programmée pour calculer une distance (DDX, DSX) entre un point d'application de la force résultante sur l'élément de poussée et l'axe de développement du levier respectif, sur la base de la valeur mesurée de la charge et de la valeur mesurée du couple.

2. Dispositif selon la revendication précédente, dans lequel les moyens capteurs (14) sont configurés de manière à déterminer la composante tangentielle (VDX, VSX) de la force résultante, et le couple (MT) généré par la composante tangentielle par rapport à l'axe de développement principal (O) du levier, l'unité de commande étant programmée afin de calculer la distance (DDX, DSX) sous la forme d'un rapport entre la valeur du couple et la valeur de la composante tangentielle.

3. Dispositif selon l'une quelconque des revendications précédentes, dans lequel les moyens capteurs (14) sont configurés de manière à déterminer la composante radiale (ODX, OSX) de la force résultante, et le couple de flexion généré par la composante radiale le long de l'axe de développement principal (O) du levier, l'unité de commande étant programmée pour calculer la distance (DDX, DSX) sous la forme d'un rapport entre la valeur du couple de flexion et la valeur de la composante radiale.

4. Dispositif selon l'une quelconque des revendications précédentes, dans lequel des moyens capteurs identiques (14) sont agencés à la fois sur le premier et sur le second levier, et comprennent :
au moins un groupe d'extensomètres (18) fonctionnellement engagés sur chaque levier (2, 6) afin de détecter au moins le couple (MT),
au moins un groupe d'extensomètres (18) fonctionnellement engagés sur chaque levier (2, 6) afin de détecter au moins la composante radiale (OSX, VDX),
au moins un groupe d'extensomètres (18) fonctionnellement engagés sur chaque levier (2, 6) afin de détecter au moins la composante axiale (VSX, VDX),
chaque groupe d'extensomètres (18) est en communication électronique avec au moins une unité de commande programmable, configurée pour:
recevoir les mesures détectées par les moyens capteurs (14), et
calculer, pour chaque levier (2, 6), la distance (DDX, DSX) entre le point d'application (DP, SP) de la force (FDX, FSX) produite par l'utilisateur sur l'élément de poussée respectif, et le point d'engagement (IDX, ISX) de l'élément de poussée sur le levier respectif (2, 6), ou la distance entre le point d'application (DP, SP) de la force (FDX, FSX) produite par l'utilisateur sur l'élément de poussée respectif, et un centre de poussée idéal placé sur l'élément de poussée à une position prédéterminée.

5. Dispositif selon l'une ou plusieurs des revendications précédentes, dans lequel les moyens capteurs (14) sont destinés à détecter, pour chaque levier ou chaque mécanisme pédale-bielle (2, 6), l'intensité de la composante tangentielle (VDX, VSX) et de la composante radiale (ODX, OSX) de la force résultante (FDX, FSX) produite par l'utilisateur sur l'élément de poussée respectif, et l'intensité de celle-ci.

6. Dispositif selon la revendication 4 ou 5, dans lequel les moyens capteurs (14) comprennent, pour chaque levier (2, 6) :
un premier capteur de déformation (19) et un second capteur de déformation (20), le premier et le second capteur de déformation (19, 20) de chaque levier (2, 6) détectant respectivement la composante tangentielle (VDX, VSX) et la composante radiale (ODX, OSX) de la force résultante (FDX, FSX) produite par l'utilisateur sur l'élément de poussée respectif, et
un troisième capteur de déformation (21) pour mesurer le couple (MT),
le premier, le second et le troisième capteur étant en communication électronique avec l'unité de commande programmable.

7. Dispositif selon l'une ou plusieurs des revendications précédentes, dans lequel l'unité de commande est configurée de manière à déterminer un paramètre d'efficacité sous forme d'un rapport entre la composante tangentielle (VDX, VSX) de la force résultante (FDX, FSX) produite par l'utilisateur sur un élément de poussée respectif et la valeur de la force résultante (FDX, FSX) produite par l'utilisateur sur l'élément de poussée.

8. Dispositif selon l'une ou plusieurs des revendications précédentes, comprenant un ou plusieurs capteurs (70) prédisposés pour détecter l'angle de rotation ou la position angulaire instantanée de chaque levier par rapport à une référence, dans lequel le ou les capteur(s) d'angle de rotation est/sont connecté(s) à l'unité de commande, l'unité de commande étant programmée pour déterminer la vitesse angulaire des leviers (2, 6).

9. Dispositif selon la revendication précédente, dans lequel l'unité de commande est programmée pour :
déterminer, pour chaque levier et sur la base du signal venant du capteur d'angle de rotation ou du capteur de position angulaire, quand chaque levier est dans une phase montante ou une phase descendante, et
calculer les valeurs de la puissance développée (PDX, PSS) à la fois pendant la montée de l'élément de poussée respectif depuis un point mort bas (PMI) jusqu'à un point mort haut (PMS) et pendant la descente de l'élément de poussée respectif depuis le point mort haut (PMS) jusqu'au point mort bas (PMI).

10. Dispositif selon la revendication 9, dans lequel l'unité de commande est configurée pour calculer, pour chaque levier, un rapport (KDX, KSX) entre la valeur de la puissance développée (PDX, PSX) pendant la phase montante ou la phase descendante de l'élément de poussée respectif, et la puissance globale développée pendant une révolution du levier respectif.

11. Dispositif selon l'une ou plusieurs des revendications précédentes, dans lequel les leviers (2, 6) sont identiques, chaque levier (2, 6) présentant :
une extrémité de connexion (3, 7) à l'opposé de l'extrémité libre respective (4, 8), dotée d'un siège d'engagement (11, 12), en option denté, pour l'insertion axiale d'une extrémité (13), en option dentée, de la broche de connexion (10) ;
une chambre de boîtier (15) pour une instrumentation électronique respective (16) des moyens capteurs (14), la chambre de boîtier (15) pouvant être refermée par un couvercle respectif (17) ;
au moins un siège (22), et de préférence deux sièges, pour loger au moins un groupe d'extensomètres (18) des moyens capteurs (14) ;
au moins une surface (23) pour supporter les capteurs de déformation (19, 20, 21), le siège (22) et la surface de support (23) pouvant être couverts par au moins un capuchon de couverture (24) ;
au moins un siège d'engagement (4a, 8a), à l'extrémité libre (4, 8), pour fixer en fonctionnement l'élément de poussée respectif, en particulier la broche de connexion (10) étant sensiblement tubulaire afin de permettre un croisement d'un ou plusieurs connecteurs électriques et/ou électroniques (10a) entre l'instrumentation électronique (16) située à l'intérieur de la chambre de boîtier (17) de chaque levier (2, 6).

12. Dispositif selon l'une ou plusieurs des revendications précédentes, dans lequel le premier et le second levier comprennent respectivement une première et une seconde unité pédale-bielle, et dans lequel le premier et le second élément de poussée comprennent une première et une seconde pédale.

13. Dispositif selon l'une ou plusieurs des revendications précédentes, dans lequel au moins un élément de couplage (25) peut être fixé au premier levier ou à la première unité pédale-bielle (2) et/ou à la broche de connexion (10), en particulier au niveau du premier levier ou de l'unité pédale-bielle (2), afin d'unir en rotation les leviers ou les unités pédale-bielle (2, 6) à au moins un élément de transmission du mouvement du système de mouvement à propulsion humaine, en particulier l'élément de couplage (25) est doté d'une pluralité de rayons (25a) s'étendant depuis une portion centrale (25b) et présentant chacun une extrémité libre (25c) destinée à être engagée avec une couronne d'une bicyclette.

14. Bicyclette comprenant un dispositif selon l'une quelconque des revendications précédentes.
